# DEMANDE DE BREVET EUROPEEN

(11) **EP 2 290 910 A1**
(43) Date de publication de la demande: **02.03.2011**
(21) Numéro de dépôt: 10168585.7
(22) Date de dépôt: 06.07.2010
(51) Int. Cl.: H04L 29/08

(54) **Procédé de synchronisation duale pour un dispositif électronique mobile**

(30) Priorité: 27.08.2009 FR 0955852
(71) Demandeur: Dmailer, 13003 Marseille (FR)
(72) Inventeur: Gantaume, Benoît, 13004, Marseille (FR); Leonardi, Lucas, 13002, Marseille (FR)
(74) Mandataire: Domange, Maxime

(57) **Abrégé**

L'invention concerne un procédé de synchronisation de données stockées au sein d'un dispositif mobile (130) apte à stocker des données et à les utiliser avec un logiciel dit logiciel client propriétaire, avec des données stockées, pour les besoins d'un logiciel dit logiciel local, au sein d'un terminal local (110), où elles sont identifiées par des identifiants dits identifiants locaux (A,B), et avec des données stockées au sein d'un serveur (120) où elles sont associées à deux types d'identifiants : les identifiants locaux (A,B) et des identifiants dits identifiants réseau (A',B'), le terminal local (110) et le serveur (120) étant aptes à communiquer, pour synchroniser les données stockées au sein du terminal local (110) avec celles stockées au sein du serveur (120), en utilisant les identifiants locaux (A,B), le procédé permettant au dispositif mobile de changer de mode de synchronisation avec le terminal local ou avec le serveur en fonction des connexions disponibles.

## Description

### Arrière-plan de l'invention

La présente invention se rapporte au domaine général des procédés de synchronisation de données stockées au sein d'un dispositif électronique mobile apte à stocker des données et à les utiliser avec un logiciel dit logiciel client propriétaire. Un tel dispositif peut être une clé USB, un assistant personnel PDA etc.

La synchronisation de données correspond à une fonction des appareils électroniques selon laquelle au moins deux ensembles de données sont rendus similaires l'un à l'autre de manière à ce que les ensembles de données se correspondent l'un à l'autre de manière substantielle, une fois la synchronisation effectuée.

Cette fonction est aujourd'hui communément utilisée entre les dispositifs mobiles et des terminaux locaux connectés à des serveurs. Cependant, aujourd'hui, la prolifération des dispositifs mobiles susceptibles d'être utilisés par un même utilisateur fait que les besoins relatifs à la synchronisation de données ont augmentés. En particulier, il existe un besoin important pour pouvoir synchroniser de manière fiable des données entre plus de deux appareils électroniques.

Il est en effet assez courant aujourd'hui, pour une personne travaillant dans un environnement d'entreprise, d'avoir à accéder à ses propres données à partir d'au moins trois appareils : un terminal local personnel, un serveur accessible au travers d'un accès internet et un dispositif mobile.

Généralement, les données à synchroniser dans ce cadre, sont des données d'informations personnelles comme des e-mails, des contacts et un calendrier.

L'emploi d'un logiciel client propriétaire au sein du dispositif mobile permet typiquement d'utiliser des données partagées avec un autre logiciel dit local installé sur un terminal local. On comprend que de telles données doivent donc être effectivement synchronisées.

Plus précisément, l'invention concerne donc la synchronisation des données stockées au sein du dispositif mobile avec des données stockées au sein d'un terminal local pour les besoins d'un logiciel dit logiciel local implémenté au sein du terminal local, la synchronisation devant également pouvoir être réalisée avec des données stockées au sein d'un serveur distant.

Dans le cadre de l'invention, le terminal local et le serveur sont aptes à communiquer entre eux pour synchroniser des données stockées au sein du terminal local pour les besoins du logiciel local et celles stockées au sein du serveur en rapport avec le fonctionnement du logiciel local, typiquement un logiciel de messagerie, de gestion de contacts, de calendrier etc.

Tous les éléments stockés sur le serveur possèdent deux types d'identifiant. Chacun de ces identifiants permet de communiquer avec le serveur selon deux protocoles différents. Un protocole dit « local » pour lequel des identifiants dits locaux sont utilisés et un autre protocole dit « réseau » ou « distant » pour lequel des identifiants dits identifiants réseau sont utilisés.

Le protocole local permet typiquement de synchroniser un logiciel local, par exemple le logiciel Outlook, fonctionnant au sein d'un terminal local avec un serveur Exchange sur le réseau local d'entreprise.

Le protocole distant ou réseau permet typiquement de consulter ses emails via un navigateur. Typiquement, les fonctions d'accès aux données stockées sur le serveur ne prennent, en paramètre, que des identifiants réseau. En revanche, il faut noter que le résultat de ces fonctions d'accès est capable de restituer les deux types d'identifiants ce qui permet d'obtenir directement un identifiant local lors de la lecture de la donnée correspondante.

Chacun de ces protocoles ne peut fonctionner qu'avec le type d'identifiant qu'il connaît. Typiquement, le logiciel local installé au sein du terminal local, par exemple Outlook, ne connaît que l'identifiant local. Ainsi, les identifiants locaux sont incompatibles avec les identifiants réseau. Il est donc impossible de mixer les deux modes de synchronisation.

Lors des synchronisations entre le terminal local et le serveur, la communication des données entre le serveur et le terminal local se fait en utilisant les identifiants locaux. Ainsi les identifiants manipulés par le logiciel local et stockés au sein du terminal local sont les identifiants locaux générés par le serveur pour les besoins de la communication avec le terminal local. Un tel fonctionnement de la paire logiciel local/serveur est courant dans les logiciels de messagerie, ou plus généralement dans les logiciels de gestion bureautique du type Outlook, etc...

Comme vu précédemment, il se trouve que les processus de synchronisation via le protocole réseau nécessitent l'utilisation d'identifiants d'un type différent. Ainsi les identifiants locaux sont incompatibles avec les identifiants utiles à la synchronisation du dispositif mobile avec le serveur qui sont les identifiants réseau.

Cependant, il existe actuellement plusieurs manières de synchroniser les données présentes sur les trois appareils évoqués ci-dessus.

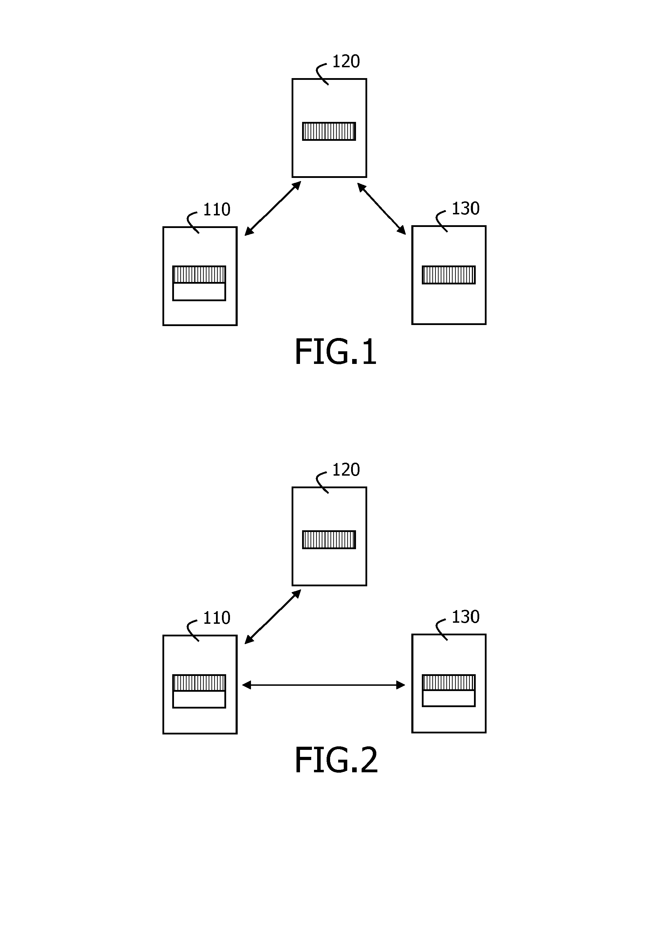

La figure 1 montre une première architecture centrée sur un serveur 120 apte à offrir des services collaboratifs tels que des e-mails, un carnet de contacts ou encore un calendrier.

Dans cette architecture, le serveur 120 est en relation avec un terminal local 110 équipé avec un logiciel local. Le serveur 120 est également en relation avec un dispositif mobile 130, apte à se connecter directement au serveur 120.

Cette architecture permet au terminal local 110 et au dispositif mobile 130 de synchroniser leurs données avec les données stockées dans le serveur 120.

Dans cette architecture, les synchronisations du terminal local et du dispositif mobile sont indépendantes. La synchronisation du terminal local 110 utilise les identifiants locaux alors que la synchronisation du dispositif mobile 130 utilise les identifiants réseau.

Dans le cas où une connexion au terminal local est effectuée avec le dispositif mobile, seules les ressources de connexion du terminal local 110 vers le serveur 120 sont utilisées par le dispositif mobile 130 pour synchroniser ses données uniquement avec les données présentes dans le serveur 120 en utilisant les identifiants réseau. Dans cette architecture, le dispositif mobile 130 ne synchronise jamais ses données directement avec les données présentes dans le terminal local 110 et identifiées avec les identifiants locaux. Dans cette architecture, le serveur 120 est en effet le centre de tous les transits de données.

Le grand avantage de cette architecture est que les données peuvent être synchronisées en temps réel au sein du dispositif mobile 130. En outre, le dialogue du dispositif mobile 130 avec le serveur 120 est tel qu'il n'envoie que les données nouvelles récentes vers le dispositif mobile 130.

Néanmoins, cette architecture présente des désavantages puisque les données présentes dans le dispositif mobile 130 doivent être limitées. En effet, les dispositifs mobiles sont généralement limités en mémoire et il existe une grande différence entre la capacité de mémoire des dispositifs mobiles et la capacité de mémoire des terminaux locaux.

La quantité de données, susceptible d'être stockée dans les dispositifs mobiles, est également limitée à cause de la lenteur du procédé de synchronisation, lorsque cette synchronisation se fait au travers d'une connexion sans fil. En effet, avec une connexion sans fil, la bande passante est limitée à la bande passante disponible sur le réseau sans fil à ce moment là. Ainsi, la synchronisation d'une boîte de messagerie classique d'environ 1 gigaoctet peut prendre des heures.

La lenteur de ce processus de synchronisation engendre aussi un problème au niveau du coût associé à cette synchronisation puisque certains des dispositifs mobiles sont connectés à un service qui est peut être facturé sur la base de l'utilisation. Aussi, plus la quantité de données synchronisées est importante, plus chère sera la synchronisation.

Néanmoins, de nombreux services de synchronisation fonctionnent sur la base de cette architecture possédant trois dispositifs distincts avec trois logiciels distincts dans chaque dispositif.

Par exemple les ensembles de trois logiciels distincts seront les suivants : Outlook/Exchange/Windows Mobile
Outlook/Excha nge/i Phone
Outlook/Exchange/Black Berry
ou encore les suivants :
AppIeMail/MobileMe/iPhone
LotusNotes/Exchange/(Windows Mobile ou iPhone ou Blackberry)
LotusNotes/Serveur Lotus/logiciel client propriétaire destiné à la mobilité.

Dans les premiers exemples d'architectures, Outlook est le logiciel local implémenté au sein du terminal local, Exchange est le logiciel traitant les données au sein du serveur et Windows Mobile, iPhone ou Black Berry intègrent des logiciels clients propriétaires permettant de synchroniser les données avec l'ensemble des données présentes au sein du serveur.

On remarque ici que la communication entre le logiciel local, par exemple Outlook, et le serveur engendre l'utilisation des identifiants locaux lorsque les données sont transmises au terminal local 110 et stockées au sein du terminal local 110.

Dans la mesure où la communication entre les logiciels clients propriétaires utilisés dans le dispositif mobile 130 et un serveur 120 n'utilise pas de changement d'identifiant et donc fonctionne avec les identifiants réseau, il n'est pas possible actuellement de synchroniser directement des données entre un terminal local 110 et un dispositif mobile 130 synchronisant ses données directement auprès du serveur 120.

La figure 2 montre une autre architecture centrée sur un terminal local 110. Dans ce cas, un terminal local 110 est apte à se connecter à un serveur 120 pour synchroniser l'ensemble de données stockées auprès du serveur 120.

Selon cette architecture, le dispositif mobile 130 est apte à se connecter directement sur le terminal local 110 au travers d'une connexion locale grâce à laquelle il va synchroniser ses données avec les données stockées dans le terminal local. Cette connexion locale est généralement réalisée au travers d'un câble série (ex : USB). Dans cette architecture, le terminal local 110 centralise les transits de données.

En effet, selon cette architecture, le terminal local 110 synchronise ses propres données avec le serveur 120 avant que le dispositif mobile 130 ne puisse synchroniser ses données avec les données telles que stockées dans le terminal local 110. Ici, le dispositif mobile 130 utilise les identifiants locaux.

Le principal avantage de cette architecture est que la connexion physique entre le dispositif mobile 130 et le terminal local 110 permet à l'utilisateur de potentiellement synchroniser ses données avec toutes les données contenues sur le terminal local 110, y compris des archives éventuelles.

Le principal désavantage est que les données ne peuvent pas être synchronisées en temps réel avec les données stockées sur le serveur 120 quand l'utilisateur est loin de son propre terminal local 110.

Ainsi, avec les solutions disponibles aujourd'hui, l'utilisateur doit choisir entre disposer de tout l'ensemble de données mais sans synchronisation en temps réel ou, avoir uniquement une partie des données mais avec une synchronisation en temps réel.

Il existe des solutions pour permettre une synchronisation en temps réel entre le terminal local et le dispositif mobile à distance mais cela présente en général un problème de sécurité et la plupart des entreprises interdisent l'usage de ces solutions.

En effet, ce type de solution s'installe sur le terminal local et ouvre un port de communication disponible de l'extérieur pour encapsuler le trafic série dans un lien réseau. Cela revient à dématérialiser un lien USB direct entre le terminal local et le dispositif mobile, ce qui ouvre des failles de sécurité importantes.

De plus, ce type de solution exige de conserver le terminal local allumé avec un logiciel propriétaire local ouvert en permanence ce qui pose des problèmes de maintenance du terminal local comme la difficulté à sauvegarder ce dernier ou le mettre à jour. A l'heure actuelle, il n'existe pas de solutions sécurisées permettant de disposer de l'ensemble des données même à distance du terminal local personnel et de pouvoir réaliser une synchronisation en temps réel.

Un des problèmes qui rend impossible la synchronisation directe avec le serveur et avec le terminal local est précisément l'utilisation de deux types d'identifiants des données.

### Objet et résumé de l'invention

La présente invention a donc pour but principal de palier les inconvénients des procédés de l'art antérieur en proposant un procédé de synchronisation de données stockées au sein d'un dispositif mobile apte à stocker des données et à les utiliser avec un logiciel dit logiciel client propriétaire, avec des données stockées, pour les besoins d'un logiciel dit logiciel local, au sein d'un terminal local, où elles sont identifiées par des identifiants dits identifiants locaux, et avec des données stockées au sein d'un serveur où elles sont associées à deux types d'identifiants : les identifiants locaux et des identifiants dits identifiants réseau, le terminal local et le serveur étant aptes à communiquer, pour synchroniser les données stockées au sein du terminal local avec celles stockées au sein du serveur, en utilisant les identifiants locaux, le procédé comprenant les étapes suivantes :
- détection d'une connexion,
- quand une connexion est détectée, détermination si cette connexion est ou non une connexion au terminal local,
- si la connexion est une connexion au terminal local, synchronisation des données stockées sur le dispositif mobile avec les données stockées dans le terminal local avec leurs identifiants locaux associés, le logiciel client propriétaire fonctionnant avec ces identifiants locaux,
- si la connexion n'est pas une connexion au terminal local, réaliser les étapes suivantes :
- test de la présence d'une connexion vers le serveur,
- si une connexion vers le serveur est disponible, envoi, par le dispositif mobile, vers le serveur, des identifiants locaux des données stockées dans le dispositif mobile et d'une requête de recherche de données associées à ces identifiants locaux auprès du serveur,
- réception, par le dispositif mobile, du résultat de la recherche comprenant les identifiants réseau associés aux identifiants locaux envoyés,
- synchronisation, commandée par le dispositif mobile, des données stockées dans le dispositif mobile avec les données stockées sur le serveur sur la base des identifiants réseau reçus.

La synchronisation est rendue possible, selon l'invention, par la corrélation des identifiants. Une interrogation du serveur sur la base des identifiants réseau retournés permet de faire une synchronisation classique utilisant un balayage des données présentes sur le serveur et une comparaison avec celles présentes dans le dispositif mobile. Les données identifiées comme ayant été modifiées ou ajoutées sont transmises au dispositif mobile.

Avec un tel procédé, on permet que les plus grandes quantités de données, par exemple des données incluant des archives, soient synchronisées auprès du terminal local en utilisant les identifiants locaux et que le dispositif mobile soit capable de synchroniser son ensemble de données, directement auprès du serveur, qui ne renvoie que les données récemment modifiées.

On remarque que la synchronisation reste à l'initiative et sous le contrôle du logiciel client propriétaire. Le serveur se contente de donner accès aux données et à la fonction de recherche. Un tel accès est réalisable, pour un dispositif quelconque non muni du logiciel local, en utilisant le protocole réseau sur lequel seuls les identifiants réseau peuvent être utilisés. Le protocole réseau est en effet le protocole générique accessible pour un logiciel autre que le logiciel local.

En outre, on note que, selon l'invention, la synchronisation ne se fait jamais en se connectant au terminal local et au serveur en même temps. En revanche, il permet de passer d'un mode de synchronisation à l'autre pour une même configuration d'options de synchronisation, ou, autrement dit, pour un même profil de synchronisation. Ce passage d'un mode de synchronisation à l'autre se fait en fonction des ressources de connexion disponibles.

Selon une caractéristique avantageuse de l'invention, la requête de recherche utilise une fonction de recherche générique offerte par le serveur permettant de trouver des éléments en fonction de critères choisis par l'utilisateur et permettant, en particulier, de faire une recherche en fonction des identifiants locaux tels qu'utilisés par le logiciel local.

L'invention tire ici profit des caractéristiques généralement observées au sein des fonctions de recherches offertes par le serveur. Une telle fonction de recherche générique est généralement utilisée pour rechercher un élément particulier, par exemple un ou des messages au nom d'un expéditeur particulier. Cependant, il se trouve que de telles fonctions de recherches génériques sont aptes également à rechercher des éléments en fonction d'autres critères que le nom d'un expéditeur et à retourner des éléments relatifs à divers critères pouvant être choisis par l'utilisateur.

L'invention utilise une fonction de recherche générique implémentée dans le serveur et apte à faire une recherche en fonction des identifiants locaux tels qu'utilisés par le logiciel local au sein du terminal local et par le dispositif mobile pour stocker les données synchronisées avec le terminal local.

Selon une caractéristique particulière, le dispositif mobile nécessitant une connexion à un terminal pour fonctionner, il utilise les ressources de connexion au serveur du terminal auquel il est connecté pour communiquer avec le serveur.

Cette caractéristique autorise une synchronisation directe avec le serveur au travers d'une connexion réalisée en utilisant les ressources de connexion de n'importe quel terminal. L'invention permet de communiquer avec le serveur et de synchroniser les données stockées dans le dispositif mobile à partir de n'importe quel terminal sans nécessiter l'installation d'une quelconque application au sein du terminal en question ou du terminal local. En particulier, avec l'invention, aucun logiciel permettant d'encapsuler les données dans un lien mimant le fonctionnement d'un lien USB entre le terminal local et le dispositif mobile n'est installé au sein du terminal. Cela évite totalement les failles de sécurité rencontrées jusque là. L'invention permet d'utiliser seulement les simples ressources de connexion du terminal pour s'adresser au serveur selon le procédé original de synchronisation selon l'invention.

Cette caractéristique donne aussi la possibilité, pour un dispositif mobile connecté au terminal local de synchroniser ses données directement auprès du serveur alors même que le terminal local auquel il est connecté n'a pas encore synchronisé son ensemble de données avec l'ensemble de données tel que présent dans le serveur.

L'invention concerne aussi un dispositif mobile capable de synchroniser des données stockées en son sein et utiles pour le fonctionnement d'un logiciel dit logiciel client propriétaire avec des données stockées, pour les besoins d'un logiciel dit logiciel local, au sein d'un terminal local où elles sont identifiées par des identifiants dits identifiants locaux , et avec des données stockées au sein d'un serveur où elles sont associées à deux types d'identifiants : les identifiants locaux et des identifiants dits identifiants réseau, le terminal local et le serveur étant aptes à communiquer pour synchroniser les données stockées au sein du terminal local avec celles stockées au sein du serveur en utilisant les identifiants locaux le dispositif comprenant les moyens suivants :
- moyens de détection d'une connexion,
- moyens de détermination pour déterminer si cette connexion est ou non une connexion au terminal local, ces moyens étant activés quand une connexion est détectée,
- moyens de synchronisation des données stockées sur le dispositif mobile avec les données stockées dans le terminal local avec leurs identifiants locaux associés, le logiciel client propriétaire fonctionnant avec ces identifiants locaux, ces moyens de synchronisation étant aptes à fonctionner quand la connexion est une connexion au terminal local,
- moyens de test de la présence d'une connexion vers le serveur,
- moyens d'envoi vers le serveur des identifiants locaux des données stockées dans le dispositif mobile et d'une requête de recherche de données associées à ces identifiants locaux auprès du serveur, ces moyens étant aptes à fonctionner quand une connexion vers le serveur est disponible,
- moyens de réception du résultat de la recherche comprenant les identifiants réseau associés aux identifiants locaux envoyés,
- moyens de synchronisation des données sur la base des identifiants réseau reçus.

Les moyens de synchronisation permettent d'interroger le serveur, à l'aide des identifiants réseau reçus, pour déterminer les données récemment modifiées ou ajoutées au sein du serveur.

Les données ajoutées ou modifiées, dites données de synchronisation, sélectionnées par les moyens de synchronisation sont alors retournées par le serveur, les synchronisations à faire étant déterminées par le dispositif mobile à partir des identifiants réseau et en comparaison avec les données présentes au sein du serveur.

Selon une implémentation préférée, les différentes étapes du procédé selon l'invention sont déterminées par des instructions de programmes d'ordinateurs.

En conséquence, l'invention vise aussi un produit programme d'ordinateur sur un support d'informations, ce programme étant susceptible d'être mis en oeuvre dans un ordinateur, ce programme comportant des instructions adaptées à la mise en oeuvre des étapes du procédé selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc), un disque dur, une mémoire flash, une clé USB etc.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
Sur les figures :
   - la figure 1 représente une première architecture d'un procédé de l'art antérieur,
   - la figure 2 représente une seconde architecture d'un procédé de l'art antérieur,
   - la figure 3 représente schématiquement l'architecture du procédé selon l'invention ;
   - la figure 4 est un organigramme fonctionnel du procédé selon l'invention.

### Description détaillée d'un mode de réalisation

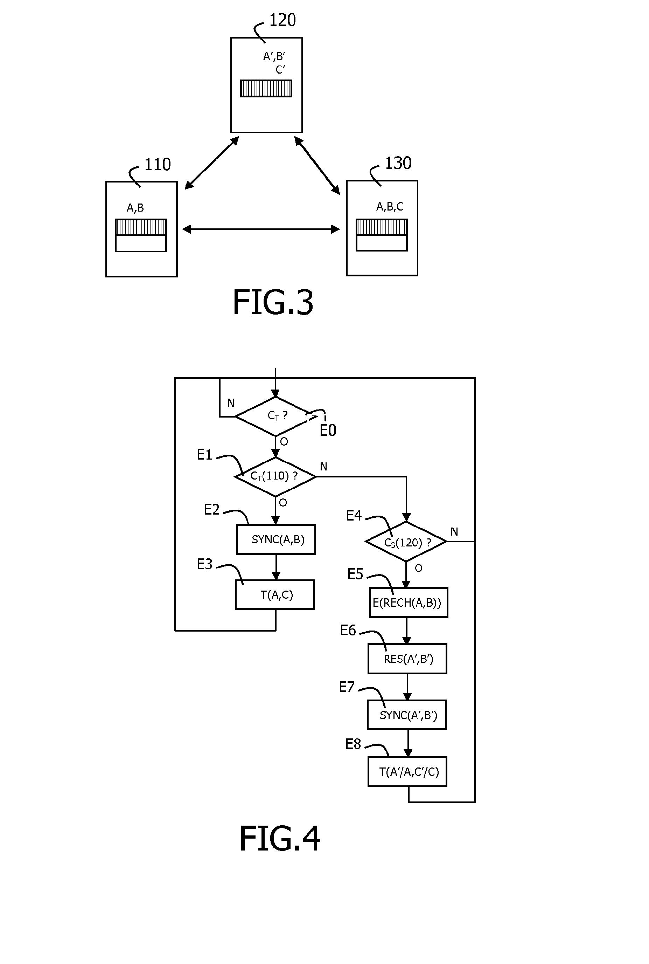

La figure 3 représente schématiquement l'architecture du procédé selon l'invention. Dans cette architecture, un dispositif mobile 130 est apte à se connecter avec un terminal local 110 et, alternativement, avec un serveur 120. Il est également apte à utiliser chacune de ces connexions pour réaliser une synchronisation des données qui sont stockées en son sein.

Ainsi que cela est défini dans le contexte de l'invention, lors des communications entre le terminal local 110 et le serveur 120, des identifiants de type 'local' sont utilisés. En outre, seuls les identifiants locaux sont utilisés pour le stockage des données au sein du terminal local 110.

Selon l'invention, la connexion locale entre le terminal local 110 et le dispositif mobile 130 est utilisée pour la synchronisation de données de la même manière que celle représentée sur la figure 2. Aussi, selon l'invention, le dispositif mobile 130 utilise les identifiants du type local dans l'ensemble de données stockées en son sein, et procède à la synchronisation avec le terminal local 110 grâce aux identifiants du type 'local'.

On remarque ici que le logiciel dit logiciel client propriétaire installé dans le dispositif mobile 130 est distinct du logiciel local utilisé au sein du terminal local 110 mais qu'il est apte à fonctionner avec les données identifiées par les mêmes identifiants locaux tels qu'utilisés par le logiciel local.

Cependant, lors des communications entre le dispositif mobile 130 et le serveur 120, des identifiants de type 'réseau' sont utilisés alors que seuls les identifiants locaux sont utilisés pour le stockage des données au sein du dispositif mobile 130. En conséquence, il n'est pas possible pour le dispositif mobile 130 de fonctionner, pour la synchronisation, de la même manière que pour l'architecture représentée sur la figure 1. En effet, dans le cadre de l'invention, le dispositif mobile 130 utilise, en son sein, les identifiants locaux, tels qu'utilisés dans le terminal local 110 et non les identifiants réseau qui lui permettraient d'effectuer la synchronisation directement auprès du serveur 120.

On comprend ici que, dans la mesure où le logiciel client propriétaire utilise les identifiants locaux pour identifier les données stockées en son sein, il ne peut dialoguer avec le serveur 120 de la manière représentée et décrite sur la figure 1.

Ainsi, si l'on note A et B des identifiants locaux de deux éléments tels que stockés dans le terminal local 110 et dans le dispositif mobile 130, les identifiants réseau correspondants sont différents et notés A', B'.

La figure 4 représente schématiquement un organigramme du procédé selon l'invention.

Dans une première étape E0, le dispositif mobile 130 détecte la présence d'une connexion à un ordinateur C_{T}.

Dans le cas où une telle connexion C_{T} est détectée, dans une étape E1, le dispositif mobile 130 détermine si cette connexion C_{T} est une connexion C_{T}(110) au terminal local 110 de l'utilisateur du dispositif mobile 130.

Dans le cas où la connexion est une connexion C_{T}(110) au terminal local 110, dans une étape E2, le dispositif mobile 130 synchronise SYNC(A,B) les données en utilisant les identifiants locaux A, B. Typiquement, le dispositif mobile 130 scanne ou balaye les données stockées au sein du terminal local et les compare aux données stockées en son sein. En présence de différences dans le contenu des données, par exemple celles comprises sous l'identifiant A, ou d'ajouts, par exemple de données sous un identifiant C, les données correspondantes sont sélectionnées afin d'être transmises au dispositif mobile 130.

Le dispositif mobile 130, qui effectue le processus de synchronisation à son initiative et sous son contrôle, réalise ensuite le transfert T(A,C), dans une étape E3, de données de synchronisation, ici les données comprises sous les identifiants A et C. Ces données de synchronisation comprennent généralement l'intégralité des données comprises, par exemple ici toutes les données comprises sous les identifiants A et C.

Dans le cas où la connexion détectée n'est pas une connexion _{C}T(110) au terminal 110, dans une étape E4, le dispositif mobile 130 teste la présence d'une connexion vers le serveur C_{S}(120).

Dans le cas où une connexion C_{S}(120) vers le serveur 120 est détectée, dans une étape E5, le dispositif mobile 130 envoie une requête de recherche E(RECH(A,B)) aux noms des identifiants locaux A, B tels qu'utilisés en son sein, vers le serveur 120.

Le dispositif mobile 130 reçoit en retour le résultat de la recherche RES(A',B') qui comprend les identifiants réseau A', B' correspondants aux identifiants locaux A,B.

Dans une étape E7, le dispositif mobile 130 synchronise SYNC(A',B') ses données sur la base des identifiants réseau reçus A',B'. Puisque le dispositif mobile 130 a connaissance de la conversion entre les identifiants réseau A',B' et les identifiants locaux A,B, il commande alors la synchronisation en fonction des données stockées en son sein sous les identifiants A et B en scannant et comparant ces données aux données stockées dans le serveur 120 sous les identifiants A' et B' correspondants. Cela permet aussi qu'il détecte des données modifiées sous ces identifiants, qu'il détecte d'éventuels nouveaux identifiants ou la disparition d'identifiants.

Ainsi, cela permet que seule la partie nouvelle des données à synchroniser, typiquement de nouveaux messages électroniques, soit envoyée vers le dispositif mobile 130. Selon ce mode de synchronisation avec le serveur 120, typiquement, la totalité des données comprises sous un identifiant n'est pas transférée dès lors qu'une donnée a été modifiée. Par exemple, le dispositif mobile 130 détecte alors des modifications parmi les données comprises sous l'identifiant A' et l'ajout de données sous de nouveaux identifiants C/C' au sein du serveur 120.

Dans une étape E8, le dispositif mobile 130 réalise alors le transfert T(A'/A,C'/C) de données de synchronisation relatives aux identifiants réseau A' et C'. On remarque ici que le traitement de la synchronisation par le dispositif mobile 130 est typiquement tel qu'il balaie des données stockées sur le serveur 120 ne sélectionne que celles qui ont été modifiés, ajoutés ou supprimés au sein des données comprises sous un identifiant donné. Les données de synchronisation retournées sous l'identifiant A' sont alors stockées dans l'ensemble de données identifiées sous l'identifiant local A et les données de synchronisation envoyées sous l'identifiant réseau C' sont stockées comme un ensemble de données identifiées au sein du dispositif mobile 130 par l'identifiant local C également fourni par le serveur lors de la synchronisation. En effet, autant les fonctions d'accès aux données stockées dans le serveur ne peuvent se faire qu'en utilisant les identifiant réseau, autant les identifiants réseau et locaux sont restituées par la fonction d'accès en résultat de la requête d'accès. Les identifiants A'/A et C'/C sont alors transmis par le serveur 120 vers le dispositif mobile 130 avec les données lors de la synchronisation.

Au cours de l'étape E5, pour obtenir la conversion de l'identifiant local A par l'identifiant au serveur A', le dispositif mobile 130 fait avantageusement appel à une fonction générique de recherche offerte par le serveur 120 de manière classique.

Une telle fonction générique de recherche permet de trouver des éléments, par exemple des messages électroniques, des dossiers, etc... en fonction d'un critère choisi par l'utilisateur.

Dans la plupart des cas, une telle recherche est faite selon des critères classiques du type « chercher les messages électroniques envoyés par X » ou alors « cherche les tâches non encore complétées ».

Ce type de recherche peut parfaitement être utilisé par le logiciel client propriétaire installé au sein du dispositif mobile 130, par exemple par un client propriétaire de messagerie.

L'invention utilise ainsi cette fonction générique de recherche afin d'effectuer une recherche de type « chercher des éléments correspondants à l'identifiant A », le serveur 120 retourne alors l'identifiant A'.

Le serveur 120 permet donc via le protocole distant, ou protocole réseau, d'effectuer la traduction entre les deux identifiants. C'est ainsi que le dispositif mobile 130 est informé de la conversion de A vers A'.

Il est alors apte à demander la synchronisation des éléments correspondants à l'identifiant A' auprès du serveur 120. En balayant les données comprises sous l'identifiant A', le dispositif mobile 130 détecte les données ayant été modifiées ou ajoutées sous cet identifiant, par exemple un nouveau message électronique dans la boite de réception.

Dans le cas de la détection d'un nouveau dossier, identifié par les identifiants C/C' automatiquement attribués par le serveur 120 lors de sa création, ce qui correspond à un nouvel élément arrivé sur le serveur, par exemple un nouveau message, le dispositif mobile 130 récupère alors les identifiants local C et serveur C' lors de la récupération des données de synchronisation.

Ainsi, il est possible, pour le dispositif mobile 130 de récupérer l'identifiant local C correspondant attribué par le serveur.

Ainsi, si un élément C/C' arrive dans le serveur 120 et qu'il est synchronisé par le logiciel client propriétaire au sein du dispositif mobile 130, il sera synchronisé grâce à l'identifiant C' mais sera stocké sur le périphérique mobile avec l'identifiant C. Ainsi lors de la synchronisation suivante, C sera correctement synchronisé.

Dans le plus mauvais cas, C n'est pas encore synchronisé sur le terminal local 110. Il sera alors considéré comme supprimé lors de la synchronisation avec le terminal local 110, puis comme nouvel élément lorsque C aura été synchronisé sur le terminal local 110.

Dans la réalité, ce cas est rare et, de toute façon, aucune donnée n'est perdue puisque C est récupéré lors de la synchronisation suivante.

Typiquement, l'invention trouve une application très intéressante dans les synchronisations des logiciels de messagerie. Ainsi, le logiciel Outlook installé sur un terminal local 110 ne connaît que l'identifiant local. Par conséquent, lors de la synchronisation locale avec le terminal local, le logiciel client propriétaire installé sur le dispositif mobile 130 fonctionne avec les identifiants du type local.

Lorsque le dispositif mobile 130 essaie ensuite de se synchroniser avec le serveur 120, il fait traduire, selon l'invention, au serveur 120 les identifiants qu'il connaît, c'est-à-dire qu'il fait traduire les identifiants locaux A,B en identifiants réseau A',B' puis les utilise ensuite pour synchroniser ses données sur celles stockées dans le serveur.

Le fonctionnement est le même pour tous les types d'objets manipulés et susceptibles d'être synchronisés : messages électroniques, contacts, tâches, notes, calendrier etc.

On remarque enfin que diverses mises en oeuvre peuvent être réalisées selon les principes de l'invention.

## Revendications

1. Procédé de synchronisation de données stockées au sein d'un dispositif mobile (130) apte à stocker des données et à les utiliser avec un logiciel dit logiciel client propriétaire, avec des données stockées, pour les besoins d'un logiciel dit logiciel local, au sein d'un terminal local (110), où elles sont identifiées par des identifiants dits identifiants locaux (A,B), et avec des données stockées au sein d'un serveur (120) où elles sont associées à deux types d'identifiants : les identifiants locaux (A,B) et des identifiants dits identifiants réseau (A',B'), le terminal local (110) et le serveur (120) étant aptes à communiquer, pour synchroniser les données stockées au sein du terminal local (110) avec celles stockées au sein du serveur (120), en utilisant les identifiants locaux (A,B), le procédé comprenant les étapes suivantes :
- détection (E0) d'une connexion (C_{T}),
- quand une connexion (C_{T}) est détectée, détermination (E2) si cette connexion (C_{T}) est ou non une connexion (C_{T}(110)) au terminal local (110),
- si la connexion (C_{T}) est une connexion (C_{T}110) au terminal local (110), synchronisation (E2) des données stockées sur le dispositif mobile (130) avec les données stockées dans le terminal local (110) avec leurs identifiants locaux associés (SYNC(A,B)), le logiciel client propriétaire fonctionnant avec ces identifiants locaux (A,B),
- si la connexion (C_{T}) n'est pas une connexion au terminal local, réaliser les étapes suivantes :
- test (E4) de la présence d'une connexion (c(120)) vers le serveur (120),
- si une connexion vers le serveur (c(120)) est disponible, envoi (E5), par le dispositif mobile (130), vers le serveur (120), des identifiants locaux (A,B) des données stockées dans le dispositif mobile (130) et d'une requête (E(RECH(A,B))) de recherche de données associées à ces identifiants locaux (A,B) auprès du serveur (120),
- réception (E6), par le dispositif mobile (130), du résultat (RES(A',B')) de la recherche comprenant les identifiants réseau (A',B') associés aux identifiants locaux (A,B) envoyés,
- synchronisation (E7), commandée par le dispositif mobile (130), des données stockées dans le dispositif mobile (130) avec les données stockées sur le serveur (120) sur la base des identifiants réseau (A',B') reçus.

2. Procédé selon la revendication 1, **caractérisé en ce que** la requête de recherche (E(RECH(A,B))) utilise une fonction de recherche générique offerte par le serveur (120) permettant de trouver des éléments en fonction de critères choisis par l'utilisateur et permettant en particulier de faire une recherche en fonction des identifiants locaux (A,B) tels qu'utilisés par le logiciel local.

3. Procédé selon l'une des revendications 1 et 2, **caractérisé en ce que**, le dispositif mobile (130) nécessitant une connexion à un terminal pour fonctionner, il utilise les ressources de connexion au serveur (120) du terminal auquel il est connecté pour communiquer avec le serveur (120).

4. Dispositif mobile (130) capable de synchroniser des données stockées en son sein et utiles pour le fonctionnement d'un logiciel dit logiciel client propriétaire avec des données stockées, pour les besoins d'un logiciel dit logiciel local, au sein d'un terminal local (110) où elles sont identifiées par des identifiants dits identifiants locaux (A,B), et avec des données stockées au sein d'un serveur (120) où elles sont associées à deux types d'identifiants : les identifiants locaux (A,B) et des identifiants dits identifiants réseau (A',B'), le terminal local (110) et le serveur (120) étant aptes à communiquer pour synchroniser les données stockées au sein du terminal local (110) avec celles stockées au sein du serveur (120) en utilisant les identifiants locaux (A,B), le dispositif comprenant les moyens suivants :
- moyens de détection d'une connexion (C_{T}),
- moyens de détermination pour déterminer si cette connexion est ou non une connexion au terminal local (C_{T}(110)), ces moyens étant activés quand une connexion (C_{T}) est détectée,
- moyens de synchronisation des données stockées sur le dispositif mobile (130) avec les données stockées dans le terminal local (110) avec leurs identifiants locaux (A,B) associés, le logiciel client propriétaire fonctionnant avec ces identifiants locaux (A,B), ces moyens de synchronisation étant aptes à fonctionner quand la connexion est une connexion au terminal local (C_{T}(110)),
- moyens de test de la présence d'une connexion vers le serveur (C_{S}(120)),
- moyens d'envoi vers le serveur (120) des identifiants locaux (A,B) des données stockées dans le dispositif mobile (130) et d'une requête (E(RECH(A,B))) de recherche de données associées à ces identifiants locaux (A,B) auprès du serveur (120), ces moyens étant aptes à fonctionner quand une connexion vers le serveur (c(120)) est disponible,
- moyens de réception du résultat de la recherche (RES(A',B') comprenant les identifiants réseau (A',B') associés aux identifiants locaux (A,B) envoyés,
- moyens de synchronisation des données sur la base des identifiants réseau (A',B') reçus.

5. Produit programme d'ordinateur comportant des instructions pour l'exécution des étapes du procédé selon l'une quelconque des revendications 1 à 3 lorsque ledit programme est exécuté par un ordinateur.

6. Support d'enregistrement lisible par un ordinateur sur lequel est enregistré un programme d'ordinateur comprenant des instructions pour l'exécution des étapes du procédé selon l'une quelconque des revendications 1 à 3.
